# EUROPEAN PATENT APPLICATION

(11) **EP 0 821 499 A2**
(43) Date of publication of application: **28.01.1998**
(21) Application number: 97305271.5
(22) Date of filing: 15.07.1997
(51) Int. Cl.: H04J 3/16, H04N 7/173, H04J 3/22

(54) **Transmission of D-channels in telecommunications systems**

(30) Priority: 25.07.1996 US 686971
(71) Applicant: LUCENT TECHNOLOGIES INC., Murray Hill, New Jersey 07974-0636 (US)
(72) Inventor: Bottiglieri, Michael Philip, Wyckoff, New Jersey 07481 (US); Kahn, David Bruce, Lincroft, New Jersey 07738 (US); Brolin, Stephen Joseph, Livingston, New Jersey 07039 (US); Masucci, Jeffrey Allen, Haverhill, Massachusetts 01832 (US)
(74) Representative: Buckley, Christopher Simon Thirsk

(57) **Abstract**

The invention is a circuit for transmitting digital information which avoids wasting bandwidth when one channel is transmitted at a slower rate than another channel. A superframe (80) is set up to include a plurality of multiplexed frames (40, 50, 60, 70). At least one of the bursts (41, 51, 61 and 71) in each frame is shared by a plurality of customers so that each customer can transmit a full payload once for each superframe.

## Description

### Field of the Invention

This invention relates to telecommunications transmission, and in particular to Integrated Services Digital Network (ISDN) transmission.

### Background of the Invention

Integrated Services Digital Network (ISDN) is a network which provides voice, data and video information over the same transmission and switching facilities. Information is usually transmitted between a host digital terminal (HDT) and the customer in the form of two "B" channels (B1 and B2) and a "D" channel, the B channels including voice and data and the D channel including data and signaling information.

Recently proposed systems, such as the Hybrid Fiber Coax (HFC) system, provide for telephony and cable TV transmission, as well as new broadband services (e.g., switched digital video), over a single network using a combination of optical fiber and coaxial cable between the host digital terminal and a network interface device (NID) located on the side or nearby each customer's location. Upstream transmission is effected in Time Division Multiple Access (TDMA) frames of 2 millisecond duration comprising a number of bursts. Since the bursts are usually transmitted at a rate of at least 64 kb/sec and the D channels are transmitted at 16 kb/sec, bandwidth is wasted. This problem is especially acute in the upstream direction (from the customer to the HDT) where bandwidth is limited.

### Summary of the Invention

The invention in accordance with one aspect is a circuit for transmitting digital information in multiplexed frames including bursts at a first data rate where at least one channel includes bursts at a second data rate which is some fraction of the first data rate. The circuit includes means for storing information transmitted at the second data rate. The circuit further includes means for transmitting the stored information at designated bursts only in every nth frame where n is an integer greater than 1.

In accordance with another aspect, the invention is a system for transmitting digital information in multiplexed frames including bursts at a first data rate where at least one channel includes bursts at a second data rate which is some fraction of the first data rate. The system includes means for providing a superframe including a plurality of the multiplexed frames, each multiplexed frame including at least one bursts for transmitting data at the second data rate. The system further comprises means for assigning to said bursts the channel from different customers for each of the multiplexed frames within the superframe.

### Brief Description of the Figures

These and other features of the invention are delineated in detail in the following description. In the drawing:
FIG. 1 is a block diagram of a system employing the invention in accordance with one embodiment;
FIG. 2 is an illustration of a typical multiplexed frame in accordance with the same embodiment;
FIG. 3 is an illustration of a superframe format in accordance with an embodiment of the invention; and
FIG. 4 is a block diagram of a circuit for transmitting information in the superframe format in accordance with the same embodiment.

### Detailed Description

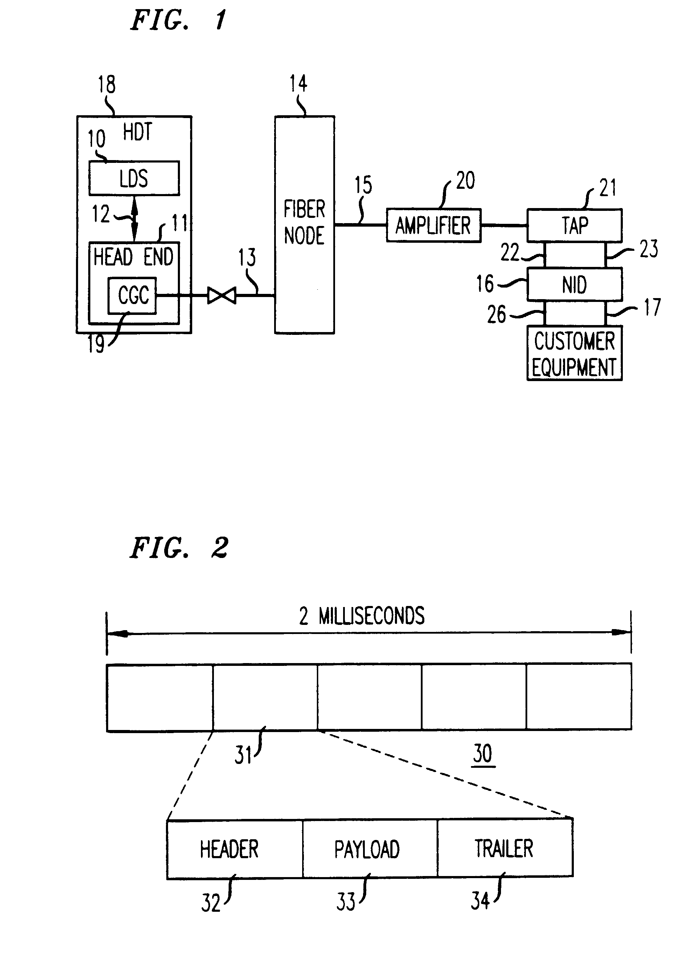

Referring now to the drawings, in which like reference numerals identify similar or identical elements, FIG. 1 illustrates a typical hybrid fiber coax system which can utilize the invention.

A Host Digital Terminal (HDT), 18, includes a Local Digital Switch (LDS), 10, which provides traditional telecommunications services. The LDS is coupled by means of a bi-directional link, 12, to a Head End, 11, which provides broadband services such as Cable TV and interactive video. The combined telephony and broadband signals are sent out over a bi-directional optical fiber link, 13. The optical fiber link, 13, is coupled to a fiber node, 14, which is located in the vicinity of a plurality of subscribers and typically serves 200- 500 subscribers. The fiber node converts the optical signals to electrical signals and transmits the electrical signals over a coaxial cable, 15.

The coaxial cable, 15, is coupled to amplifiers, e.g., 20, which can be used throughout the system to maintain communications signal levels and can also be used to split the coaxial signal into several branches. Taps, 21, separate power from the communication signal, transmitting the communication signals through a coaxial cable, 22, and power through a copper pair, 23, to Network Interface Devices (NIDs), e.g., 16, mounted outside the subscriber's house. A coaxial cable, 17, connects the NID, 16, to the customer's video equipment, such as a TV or computer, and one or more pair of copper wires, 26, connect to the customer's telephone or computer modem.

In the reverse direction, electrical signals would be transmitted from the customer's equipment, through the NID, 16, and the amplifiers, 20, and to the fiber node, 14, where the electrical signals would be converted to optical signals and sent back to the HDT.

FIG. 2 illustrates the upstream (from NID to HDT) digital transmission format for the system illustrated in FIG. 1. Each TDMA frame, 30, has an interval of 2.0 millisec and is divided into bursts, e.g., 31, each of which carries transmitted digital information from a different NID. Each burst, as illustrated, will include a header portion, 32, a payload portion, 33, which carries the message from the customer, and a trailer portion, 34. The bursts within a frame may vary in size depending upon the type of service provided to each customer and whether the burst is a traffic or control burst. For example, the standard voice-grade DS0 service will have a total of 232 bits with a payload of 128 bits for each B channel. However, within the same 2.0 ms frame, D channels carry only 32 bits of payload for each customer with the same overhead. Consequently, bandwidth was wasted.

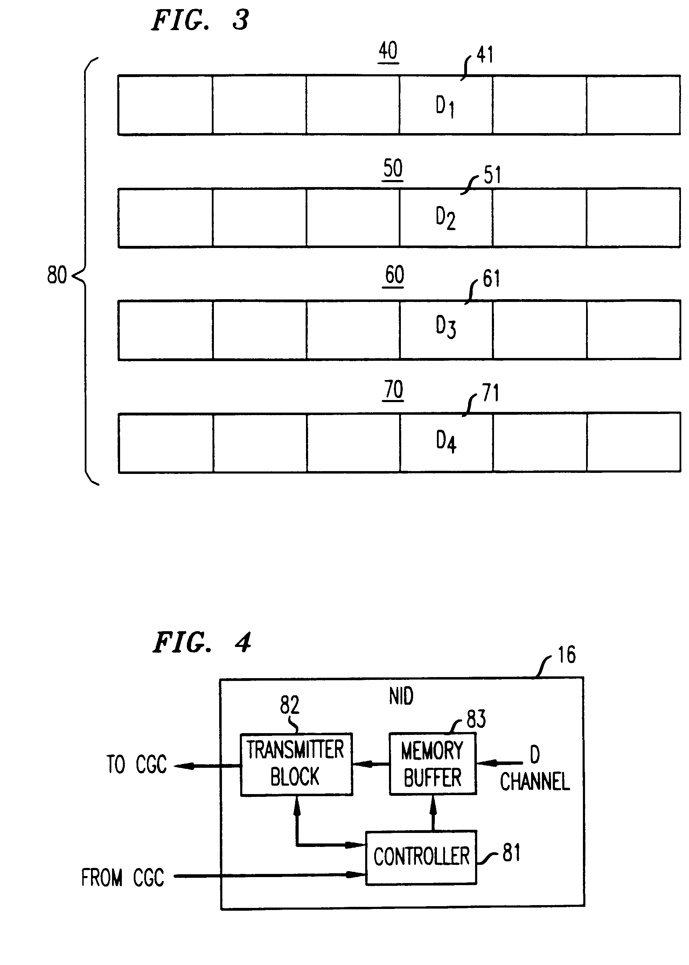

In accordance with a main feature of the invention, as illustrated in FIG. 3, a format is provided which involves the creation of four frames, 40, 50, 60, and 70, which constitute a superframe, 80. Each frame of the superframe is similar to the frame, 30, illustrated in FIG. 2, with the exception of any bursts, e.g., 41, 51, 61, and 71, which carry D channel information. Here, four different customers will share the same position (41, 51, 61, 71) designated for the D channel information in the different frames, 40, 50, 60, and 70. Thus, frame 40 will carry the information from customer D1 in burst 41, frame 50 will carry the D channel information from customer D2 in burst 51, frame 60 will carry the D channel information of customer D3 in burst 61, and frame 70 will curry the D channel information of customer D4 in burst 71. This pattern will be repeated in each subsequent superframe. Each customer's D channel information will be delayed for the period of 4 frames so that each customer will transmit the full 128 bit payload when it is his or her turn to use the designated position in the superframe. Since the D channels are used for data and signaling and not for telephony, the system can tolerate the 8 millisec delay from each customer.

FIG. 4 illustrates in some more detail the circuitry in each NID (16 of FIG. 1) which permits the transmission of the D channel information as described above. D channel information from the customer is coupled to a memory buffer, 83, which stores the information until it is that customer's turn to transmit in the appropriate multiplexed frame. In this example, where four customers are sharing a burst, the memory stores at least 16 Bytes. A controller, 81, which can be a conventional microcontroller or a high power digital signal processor, is coupled to the memory, 83, and also receives instructions from the Channel Group Controller (CGC), 19 of FIG. 1, which is located at the Host Digital Terminal, 18. The CGC will inform the controller, 81, of the start of each superframe, the burst number which is to include the D channel information (41, 51, 61, and 71 of FIG. 3), and in which frame within the superframe that NID is to transmit (40, 50, 60, or 70). The controller, 81, therefore, releases the stored D channel information at the approriate time to the transmitter block, 82, so that the information is transmitted in the designated frame.

In general, the invention can be used to transmit bursts from one of n customers in every nth frame where n is an integer greater than 1.

## Claims

1. A circuit for transmitting digital information in multiplexed frames including bursts at a first data rate where at least one channel includes bursts at a second data rate which is some fraction of the first data rate CHARACTERIZED BY:
means (83) for storing information transmitted at the second data rate; and
means (16) for transmitting the stored information at designated bursts only in every nth frame where n is an integer greater than 1.

2. The circuit according to claim 1 wherein the channel is an integrated services digital network D channel.

3. The circuit according to claim 1 wherein the first data rate is n times the second data rate, and n multiplexed frames are transmitted as a superframe (80).

4. The circuit according to claim 3 wherein n is equal to 4.

5. The circuit according to claim 1 wherein the means for storing the information comprises a memory buffer (83).

6. The circuit according to claim 5 wherein the memory has a capacity of at least 16 bytes.

7. The circuit according to claim 1 wherein the means for transmitting comprises a controller (81) coupled to a transmitter block (82) and to the means for storing.

8. A system for transmitting digital information in multiplexed frames including bursts at a first data rate where at least one channel includes bursts (e.g., 41, 51, 61 and 71) at a second data rate which is some fraction of the first data rate, the system comprising:
means for providing a superframe (80) including a plurality of the multiplexed frames (40, 50, 60, 70), each multiplexed frame including at least one burst for transmitting data at the second data rate; and
means for assigning to said burst the channel from different customers for each of the multiplexed frames within the superframe.

9. The system according to claim 8 wherein the system is an integrated services digital network and the channel is a D channel.

10. The system according to claim 8 wherein the first data rate is n times the second data rate, and the superframe consists of n multiplexed frames.

11. The system according to claim 10 where n is equal to 4.

12. The system according to claim 8 wherein the means for providing the superframe and for assigning the bursts comprises a channel group controller (19).
